# EUROPEAN PATENT APPLICATION

(11) **EP 4 063 065 A1**
(43) Date of publication of application: **28.09.2022**
(21) Application number: 22163575.8
(22) Date of filing: 22.03.2022
(51) Int. Cl.: B23Q 1/01, B23Q 11/08

(54) **A MACHINE FOR MECHANICAL MACHINING OF A MECHANICAL WORKPIECE**

(30) Priority: 25.03.2021 IT 202100007256
(71) Applicant: Jobs S.p.A., 29122 Piacenza (IT)
(72) Inventor: AGOSTI, Dante, 25030 Lograto (IT)
(74) Representative: Bianciardi, Ezio

(57) **Abstract**

A machine (1) for mechanical machining of a mechanical workpiece having a volume greater than 3 cubic metres, comprises: a machining chamber (CL), delimiting a machining zone, in which the mechanical workpiece is machined, and including a movement interface; a base (BS), positioned, along a vertical direction (V), below the machining chamber (CL); a movement unit (3), connected to the movement interface of the machining chamber (CL) to move along a first direction, perpendicular to the vertical direction (V); an operating arm (4), elongate along a respective axis, parallel to the vertical direction (V), between a first end and a second end, the operating arm (4) being removably connected to the movement unit (3), to move along a second direction, perpendicular to the first direction; at least one working tool (5), connected to the first end of the arm (4), movable along the vertical direction (4) and configured to perform machining operations on the mechanical workpiece. the operating arm (4) comprises an outer sleeve (41), including four walls, joined to each other by curved connectors. The four side walls are made by bending a flat wall.

## Description

This invention relates to a machine for machining mechanical workpieces, in particular, large workpieces greater than 3 cubic metres in size.

In this technical field, machining is carried out using machines of considerable bulk and weight. Furthermore, during machining operations, these machines are subjected to immense forces.

Thus, in prior art solutions, such machines must be provided with proper foundations so that they cannot move under the action of the forces generated when they are working.

Building the foundations, however, is not only very onerous but also restrictive in that once a machine has been installed, moving it to another location requires building another foundation.

Further, prior art machines are provided, at the top, with a movable bellows which opens and closes to allow or prevent access to the machining chamber in which the mechanical workpiece is machined.

In some cases, however, the bellows cannot open wide enough to allow insertion of particularly cumbersome workpieces. The result is that although the machining chamber is potentially large enough to accommodate the workpiece, placing it inside is either impossible or possible only after laborious, time consuming operations to dismantle some of the machine components.

The machine also comprises an operating arm having, at one end of it, an operating head with the tools used for machining the workpiece. In prior art machines, this arm is made using four perpendicular metal sheets which are welded to each other to form a through cross section that is rectangular or square. This embodiment is, however, disadvantageous because of the arm's considerable moment of inertia and because the welds may constitute weak points of the part.

Solutions of machines for machining mechanical workpieces are known from documents US7226403B2 and CN106112565B.

This disclosure has for an aim to provide a machine and a method for machining a mechanical workpiece to overcome the above mentioned disadvantages of the prior art.

This aim is fully achieved by the machine and method of this disclosure as characterized in the appended claims.

According to an aspect of it, this disclosure provides a machine for mechanical machining of a mechanical workpiece having a volume greater than 3 cubic metres, preferably between 6 and 9 cubic metres.

The machine comprises a frame. The frame comprises a machining chamber. The machining chamber delimits a machining zone. The machining zone is the zone in which the mechanical workpiece is machined. The frame comprises a movement interface.

The machine comprises a base. The base is positioned, along a vertical direction, below the machining chamber.

The machine comprises a movement unit. The movement unit is connected to the movement interface of the machining chamber. Thus, the movement unit can move along a first direction, perpendicular to the vertical direction.

The machine comprises an operating arm. The operating arm is elongate along a respective axis, preferably parallel to the vertical direction, between a first end and a second end.

The operating arm is removably connected to the movement unit to move along a second direction, perpendicular to the first direction.

The machine comprises at least one working tool. The working tool is connected to the first end of the arm. The working tool is movable along the vertical direction. The working tool is configured to perform machining operations on the mechanical workpiece.

In an embodiment, the working arm comprises an outer sleeve. The outer sleeve comprises four walls. The four walls are joined to each other by curved connectors. It should be noted that the curved connectors are not necessarily separate from the walls but may be parts of the walls themselves. In particular, in an embodiment, the curved connectors are made uninterruptedly from the same material as the walls. In other words, the four walls are made from a single part and are thus integral with each other. Preferably, the four side walls are made by bending a flat wall (piece of a flat metal sheet).

That way, the arm has smaller inertia and is very solid in that it does not have any weld points or breaks in material continuity that might reduce the strength of the arm.

In an embodiment, the machining chamber comprises two side walls. The machining chamber comprises a bellows. The bellows delimits the machining chamber along the vertical in a direction opposite to the direction of the weight force. The bellows is movable to be retracted and extended responsive to a movement of the movement unit relative to the machining chamber.

In an embodiment, the movement interface comprises a guide. The bellows also comprises a slide. The slide runs in the guide.

In an embodiment, the machining chamber comprises a locking element. The locking element is configured to constrain the bellows to run in the guide of the movement interface.

In an embodiment, the locking element is movable between a locked position, where the bellows is constrained to the guide, and an unlocked position, where the bellows is removable from the guide. In particular, when the locking element is at the unlocked position, the bellows is removable by moving the bellows vertically in a removing direction opposite to the direction of the weight force. It should be noted that changing the position of the locking element from the locked to the unlocked position does not mean removing a component but is simply a change in position which allows the bellows to be removed quickly and easily so that a particularly large mechanical workpiece can be inserted.

In an embodiment, the ratio between a height along the vertical direction of the machine and a height along the vertical direction of the base is a value between 5 and 9.

In an embodiment, the ratio between a weight of the machine and a weight of the base is a value between 1.5 and 4.

In an embodiment, the ratio between a total volume occupied by the machine and a volume of the machining chamber is a value between 20 and 30.

These dimensional and weight parameters make it possible to avoid the need for foundations, since the features of the base are such as to assure the stability of the machine.

According to an aspect of it, this disclosure provides a method for machining a mechanical workpiece having a volume greater than 3 cubic metres, preferably a volume between 6 and 9 cubic metres.

The method comprises a step of preparing a machine for machining mechanical workpieces and comprising: a base; a machining chamber, including a guide; a bellows, connected to the guide by a locking element; an operating arm; a working tool connected to the operating arm.

The method comprises a step of unlocking the locking element of the machine.

The method comprises a step of removing the bellows from the guide. The method comprises a step of inserting the mechanical workpiece.

The method comprises a step of re-positioning the bellows on the guide. The method comprises a step of locking the locking element.

The method comprises a step of moving the operating arm, thereby retracting and extending the bellows.

The method comprises a step of performing a machining operation on the mechanical workpiece by means of the working tool.

According to an aspect of it, this disclosure also provides a method for making an operating arm for a machine for machining mechanical workpieces having a volume greater than 3 cubic metres, preferably having a volume between 6 and 9 cubic metres.

The method comprises a step of manufacturing a first connector, configured to connect to a working tool.

The method comprises a step of manufacturing a second connector, configured to connect to a movement unit of the operating arm.

The method comprises a step of preparing a piece of sheet metal.

The method comprises a step of bending the piece of sheet metal to form a sleeve, elongate along an axis between a first and a second end and including four walls and four corresponding curved connectors, preferably made from the same material as the walls and connected uninterruptedly thereto.

The method comprises a step of connecting the first connector to the first end of the sleeve.

The method comprises a step of connecting the second connector to the second end of the sleeve.

This and other features will become more apparent from the following description of a preferred embodiment of the invention, illustrated purely by way of non-limiting example in the accompanying drawings, in which:

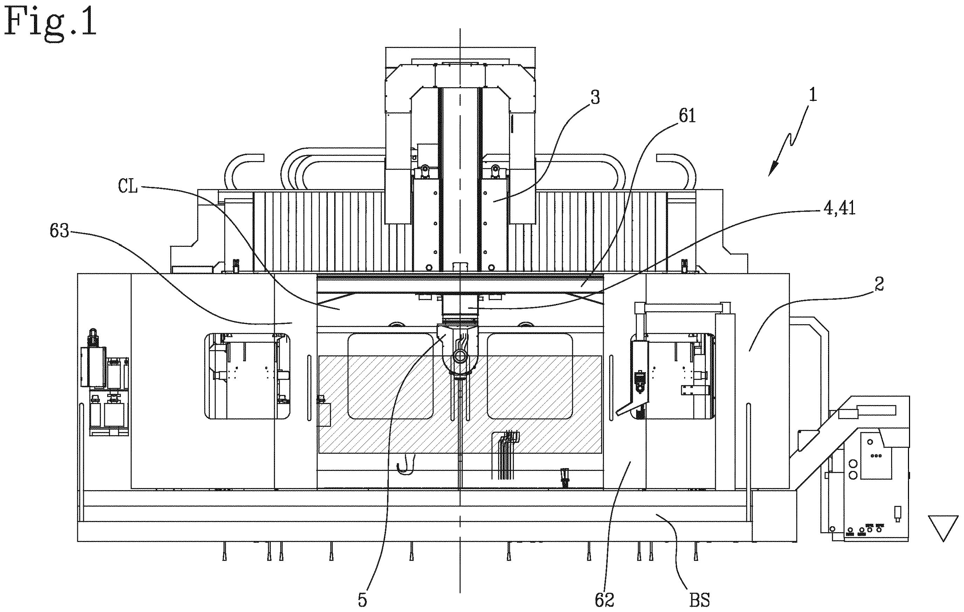

- Figure 1 illustrates a machine for mechanical machining of a workpiece according to this disclosure;

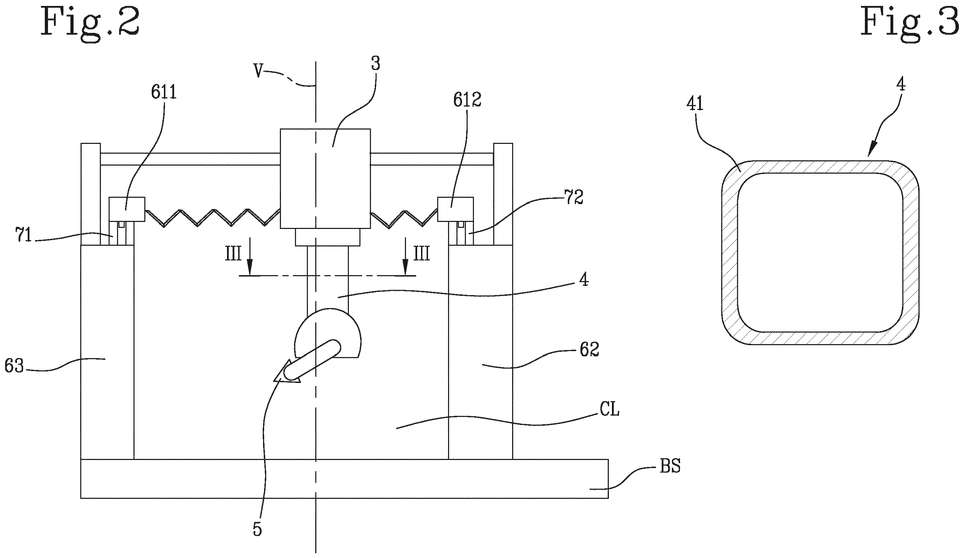

- Figure 2 shows a schematic side view of the machine of Figure 1;
- Figure 3 shows a detail of a cross section of an operating arm of the machine of Figure 1.

With reference to the accompanying drawings, the numeral 1 denotes a machine for machining a mechanical workpiece.

The machine 1 comprises a frame 2. The frame 2 comprises a machining chamber CL. The machining chamber CL defines a first volume in which the mechanical workpiece to be machined is placed. The machining chamber CL is delimited by a bellows 61 and four side walls. The bellows 61 delimits the top of the machining chamber CL.

The frame 2 comprises a base BS, positioned, along a vertical direction V, below the machining chamber CL. The base BS is configured to rest on a surface that supports the machine. The weight of the base BS is such as to keep the machine 1 stable during mechanical machining operations without the need for foundations.

The four side walls extend upwards from the base to delimit the machining chamber CL.

The four side walls comprise a first side wall 62 and a second side wall 63. The first and the second side wall 62 and 63 comprise a respective first guide 71 and second guide 72.

The bellows 61 comprises a first slide 611 and a second slide 612. The first slide 611 ad the second slide 612 are configured to run in (along) the first guide 71 and the second guide 72, respectively. That way, the bellows can be extended and retracted.

In an embodiment, the machine 1 comprises a first and a second locking element.

The first locking element is connected to the first slide 611 and to the first guide 71 so as to be able to constrain them. In particular, the first locking element is movable (configurable) between a respective locked position, where the first slide 611 is constrained to the first guide 71 along the vertical direction, and a respective unlocked position, where the first slide is clear of the first guide 71 along the vertical direction and can, therefore, be removed from the first guide 71 by a simple lifting movement.

The second locking element is connected to the second slide 612 and to the second guide 72 so as to be able to constrain them. In particular, the second locking element is movable (configurable) between a respective locked position, where the second slide 612 is constrained to the second guide 72 along the vertical direction, and a respective unlocked position, where the second slide 612 is clear of the second guide 72 along the vertical direction and can, therefore, be removed from the second guide 72 by a simple lifting movement.

In an embodiment, the machine 1 comprises a movement unit 3, configured to move relative to the machining chamber CL, so as to vary its position relative to the mechanical workpiece positioned inside the machining chamber.

The movement unit 3 is movable along a first direction, perpendicular to the vertical direction V. The bellows 61 is configured to be retracted and extended along the first direction in such a way as to follow the movement unit 3 as it moves, while keeping the machining chamber CL closed relative to an external environment.

The machine 1 comprises an operating arm 4 which extends from the movement unit 3 along a vertical direction V towards the machining chamber CL. The operating arm 4 comprises a sleeve 41 having a rectangular cross section with rounded corners. The sleeve 41 is obtained by bending a piece of sheet metal and is made from a single material without breaks.

Inside the sleeve 41, there are one or more hydraulic/electrical connections for the mechanical machining operations to be carried out.

In an embodiment, the operating arm 4 rotates about an axis of rotation, parallel to the vertical direction V.

In an embodiment, the machine 1 comprises at least one working tool 5, configured to perform different mechanical operations on the mechanical workpiece. The machine 1 comprises a plurality of actuators (rotary and/or linear) configured to actuate the movement unit 3 and/or the operating arm 4 and/or the working tool 5.

In an embodiment, the operating arm 4 is movable along a second direction, perpendicular to the first direction and to the vertical direction V. In an embodiment, the operating arm 4 is movable along a vertical direction V. In an embodiment, the working tool 5 is movable along the vertical direction V relative to the operating arm 4.

In an embodiment, the ratio between a height along the vertical direction V of the machine 1 and a height along the vertical direction of the base BS is a value between 5 an 9, preferably between 6 and 8, preferably between 6.5 and 7.5. In an embodiment, the ratio between a weight of the machine 1 and a weight of the base BS is a value between 1.5 and 4, preferably between 2 and 3.5, preferably between 2.5 and 3. In an embodiment, the ratio between a total volume occupied by the machine 1 and a volume of the machining chamber CL is a value between 20 and 30, preferably between 23 and 28, preferably between 24 and 26.

## Claims

1. A machine (1) for mechanical machining of a mechanical workpiece having a volume greater than 3 cubic metres, comprising:
a frame (2), including:
- a machining chamber (CL), delimiting a machining zone, in which the mechanical workpiece is machined, and including a movement interface;
- a base (BS), positioned, along a vertical direction (V), below the machining chamber (CL);
- a movement unit (3), connected to the movement interface of the machining chamber (CL) to move along a first direction, perpendicular to the vertical direction (V);
- an operating arm (4), elongate along a respective axis, parallel to the vertical direction (V), between a first end and a second end, the operating arm (4) being removably connected to the movement unit (3), to move along a second direction, perpendicular to the first direction;
- at least one working tool (5), connected to the first end of the arm (4), movable along the vertical direction (V) and configured to perform machining operations on the mechanical workpiece;
**characterized in that** the operating arm (4) comprises an outer sleeve (41), including four walls, joined to each other by curved connectors, and wherein the four side walls are made by bending a flat wall.

2. The machine (1) according to claim 1, wherein the machining chamber comprises two side walls (62, 63) and a bellows (61), delimiting the machining chamber (CL) along the vertical direction (V) in a direction opposite to the direction of the weight force, and being movable to be retracted and extended in response to a movement of the movement unit (3) relative to the machining chamber (CL).

3. The machine (1) according to claim 2, wherein the machining chamber (CL) comprises a guide (71, 72), positioned in at least one of the two side walls (62, 63), and wherein the bellows (61) comprises a slide (611, 612), slidable inside the guide (71, 72).

4. The machine (1) according to claim 3, wherein the machining chamber (CL) comprises a locking element, configured for constraining the bellows (61) to the side walls (62, 63) along the vertical direction (V).

5. The machine (1) according to claim 4, wherein the locking element is movable between a locked position, wherein the bellows (61) is constrained to the guide (71, 72), and a released position, wherein the bellows (61) is removable from the guide (71, 72) with a movement of the bellows (61) along the vertical direction (V) in a direction of removal, opposite to the direction of the weight force.

6. The machine (1) according to any one of the preceding claims, wherein the ratio between a height along the vertical direction of the machine (1) and a height along the vertical direction of the base (BS) is a value between 5 and 9.

7. The machine (1) according to any one of the preceding claims, wherein the ratio between a weight of the machine (1) and a weight of the base (BS) is a value between 1.5 and 4.

8. The machine (1) according to any one of the preceding claims, wherein the ratio between a total volume occupied by the machine (1) and a volume of the machining chamber (CL) is a value between 20 and 30.

9. A method for making an operating arm (4) for a machine for machining mechanical workpieces having a volume greater than 3 cubic metres, the method comprising the following steps:
- manufacturing a first connector, configured to connect to a working tool (5);
- manufacturing a second connector, configured to connect to a movement unit (3) of the operating arm (4);
- preparing a piece sheet metal;
- bending the piece of sheet metal to form a sleeve (41), elongate along an axis between a first and a second end and including four walls and four corresponding curved connectors;
- connecting the first connector to the first end of the sleeve (41);
- connecting the second connector to the second end of the sleeve (41).
